# EUROPEAN PATENT APPLICATION

(11) **EP 4 546 733 A1**
(43) Date of publication of application: **30.04.2025**
(21) Application number: 23827522.6
(22) Date of filing: 21.06.2023
(51) Int. Cl.: H04L 27/26, H04L 5/00, H04L 69/24, H04W 84/12, H04W 16/14, H04W 16/10, H04W 74/08, H04W 88/08

(54) **QUIET CHANNEL-BASED TRANSMITTING OR RECEIVING METHOD AND APPARATUS IN WIRELESS LAN SYSTEM**

(30) Priority: 23.06.2022 KR 20220077025; 01.07.2022 KR 20220081427; 11.10.2022 KR 20220130005; 19.10.2022 KR 20220135120
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Maikowski & Ninnemann Patentanwälte Partnerschaft mbB
(86) International application number: PCT/KR2023/008629
(87) International publication number: WO 2023/249412

(57) **Abstract**

Disclosed are a quiet channel-based transmitting or receiving method and apparatus in a wireless LAN system. A method performed by a station (STA) in a wireless LAN system, according to an embodiment of the present disclosure, may comprise the steps of: receiving a quiet channel element including information indicating one combination from among a plurality of combinations of channels through which communication to a first access point (AP) is allowed within a bandwidth or channels through which the communication to the first AP is not allowed; and performing the communication to the first AP over one or more channels based on the one combination.

## Description

### [TECHNICAL FIELD]

The present disclosure relates to a quiet operation in a wireless local area network (WLAN) system, and more particularly, relates to a quiet channel-based transmission or reception method and device.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a quiet channel-based transmission or reception method and device in an extended bandwidth in a WLAN system.

An additional technical problem of the present disclosure is to provide a transmission or reception method and device based on access point quiet mode information applicable to an extended bandwidth in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a WLAN system according to an aspect of the present disclosure may include receiving a quiet channel element including information indicating one combination among a plurality of combinations for a channel through which communication to a first access point (AP) is allowed within a bandwidth or a channel through which communication to the first AP is not allowed; and performing communication to the first AP on at least one channel based on the one combination.

A method performed by a first access point (AP) in a WLAN system according to an additional aspect of the present disclosure may include transmitting to a station (STA) a quiet channel element including information indicating one combination among a plurality of combinations for a channel through which communication to the first AP is allowed within a bandwidth or a channel through which communication to the first AP is not allowed; and performing communication with the STA on at least one channel based on the one combination.

### [Technical Effects]

According to the present disclosure, a quiet channel-based transmission or reception method and device in an extended bandwidth in a WLAN system may be provided.

According to the present disclosure, a transmission or reception method and device based on access point quiet mode information applicable to an extended bandwidth in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied.
FIG. 9 is a diagram for describing an example of an individual TWT operation to which the present disclosure may be applied.
FIG. 10 is a diagram for describing an example of a broadcast TWT operation to which the present disclosure may be applied.
FIG. 11 is a diagram showing an exemplary format of a quiet element and an exemplary format of a quiet channel element to which the present disclosure may be applied.
FIG. 12 is a diagram for describing an example of a quiet channel-based operation of a STA according to the present disclosure.
FIG. 13 is a diagram for describing an example of a quiet channel-based operation of an AP according to the present disclosure.
FIGS. 14 to 20 are a diagram for describing various examples of a quiet channel-based operation according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

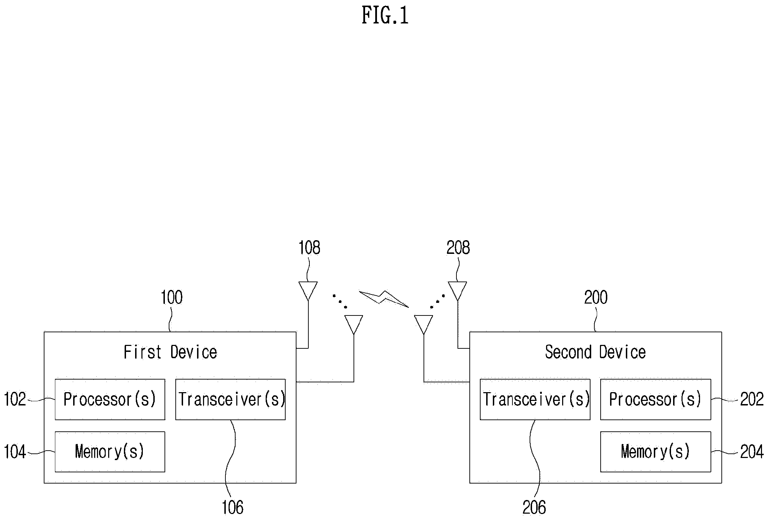

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

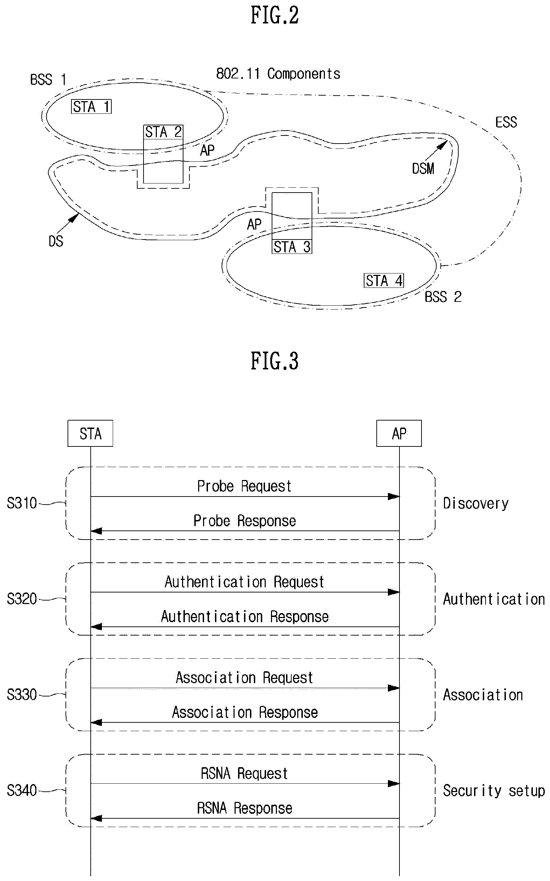

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

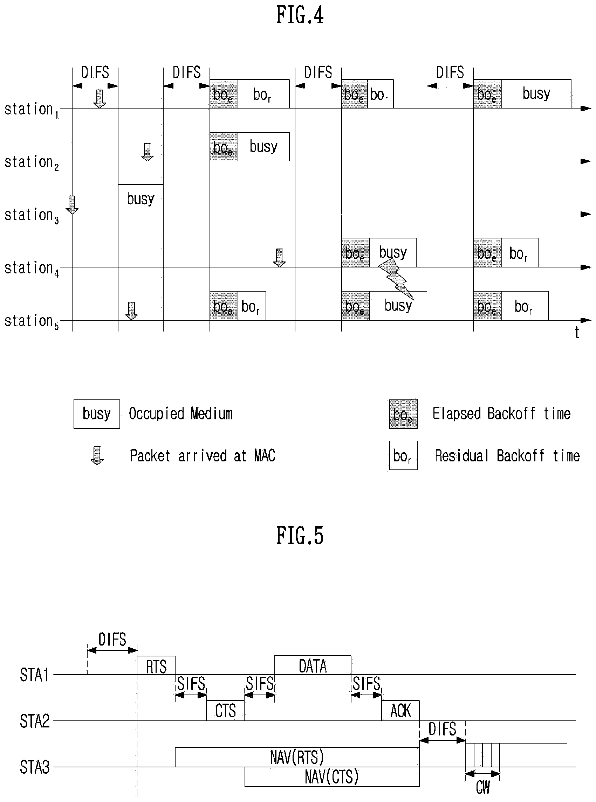

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

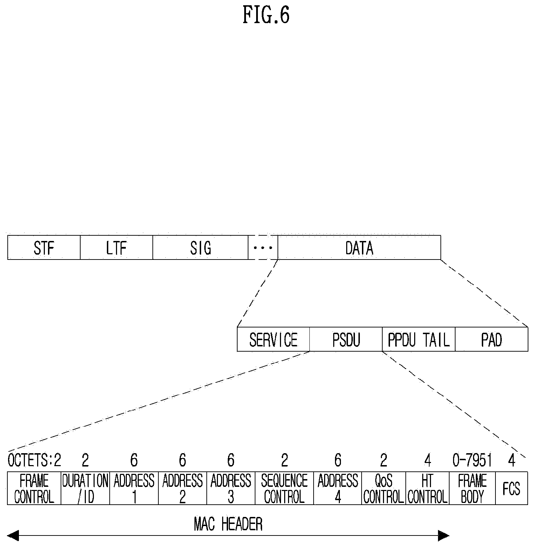

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

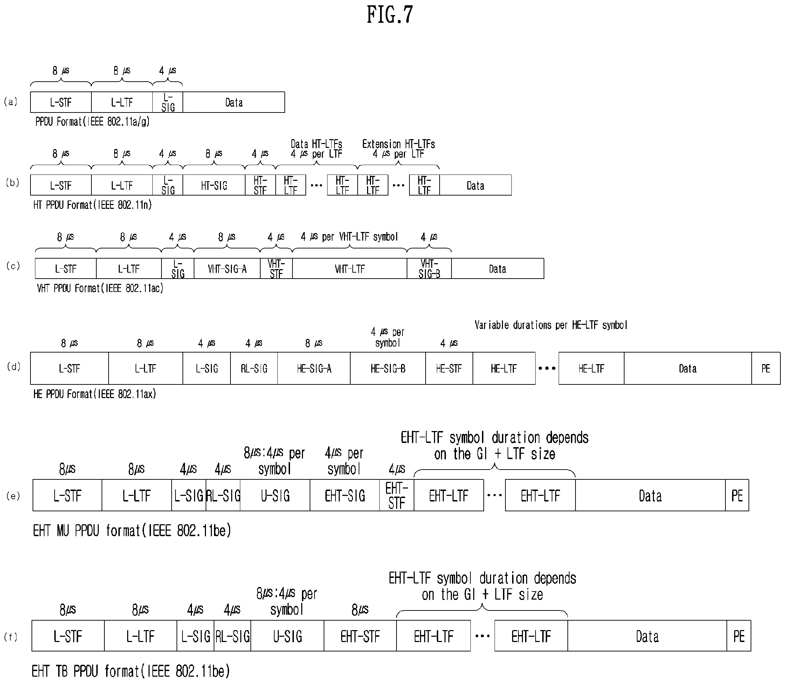

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

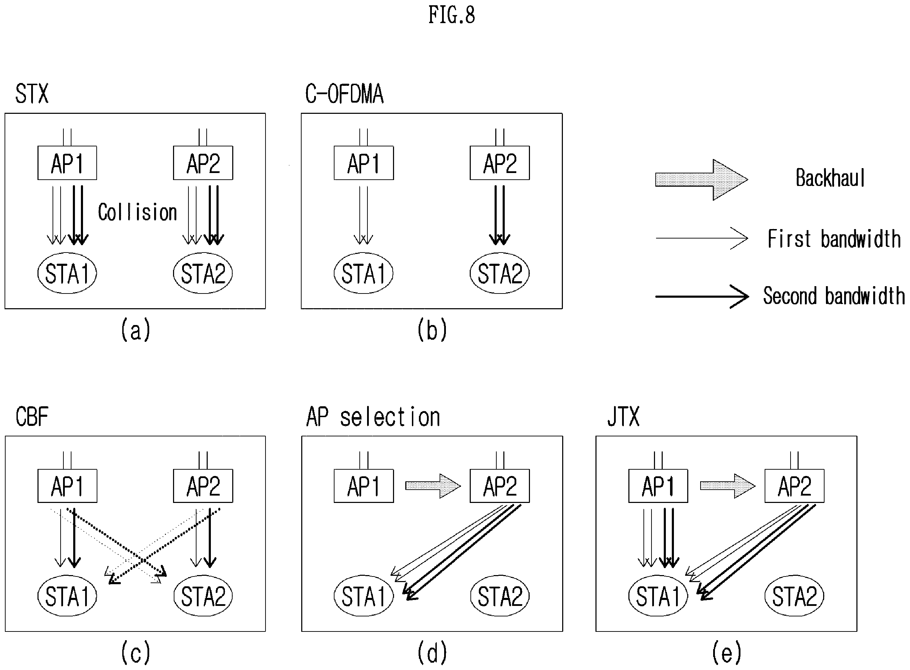

FIG. 8 is a diagram for describing various transmission or reception techniques in a MAP environment to which the present disclosure may be applied.

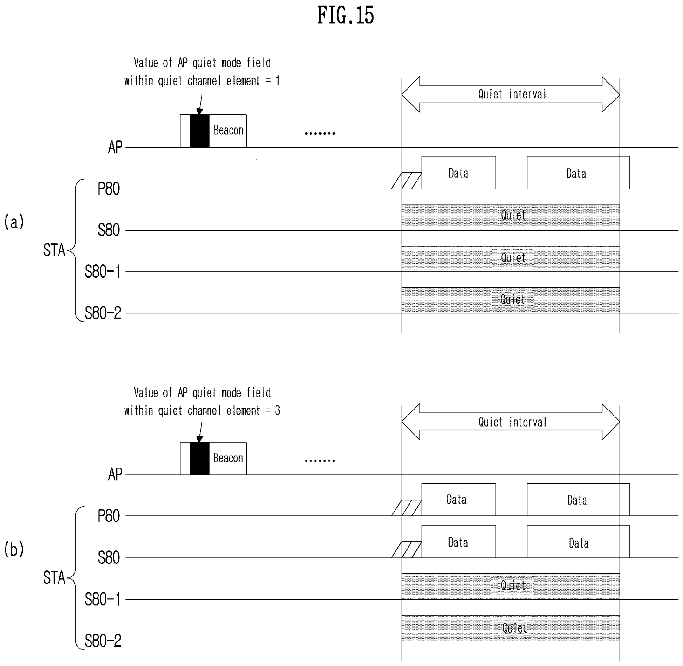

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 15(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

In the examples of the present disclosure, it is assumed that a multi-AP operation is performed as follows.
Step 1: Distribute a resource region to each AP through a trigger frame from a master AP (i.e., an AP-to-AP trigger frame, or a master trigger frame)
Step 2: Each AP performs DL (i.e., from an AP to a STA) data transmission in a resource region distributed to it, or transmits a trigger frame (i.e., an AP-to-STA trigger frame) for UL (i.e., from a STA to an AP) data transmission in a resource region distributed to it.
Step 3: A STA transmits a response to DL data, or transmits through UL data (e.g., a TB PPDU).

When a resource distributed between APs is a frequency resource, it may correspond to a C-OFDMA method, when it is a time resource, it may correspond to a C-TDMA technique and when it is a spatial resource (or beam), it may correspond to a CBF method. In examples described below, it is described representatively by assuming that a C-OFDMA technique, i.e., a multi-AP operation through a resource distinguished in a frequency domain, is performed. However, a scope of the present disclosure is not limited thereto, and may additionally or alternatively include a multi-AP operation through a resource distinguished in another domain (e.g., a time domain and/or a space domain).

### Target Wake Time (TWT)

Hereinafter, a target wake time (TWT) is described.

A TWT is a power saving (PS) technology which may improve energy efficiency of non-AP STAs by defining a service period (SP) between an AP and non-AP STA and sharing information about a SP each other to reduce media contention. A STA which performs a request/a suggest/a demand, etc. in a TWT setup step may be referred to as a TWT requesting STA. In addition, an AP which responds to a corresponding request such as Accept/Reject, etc. may be referred to as a TWT responding STA. A setup step may include a TWT request for an AP of a STA, a type of a TWT operation performed and a process of determining/defining a frame type transmitted or received. A TWT operation may be divided into an individual TWT and a broadcast TWT.

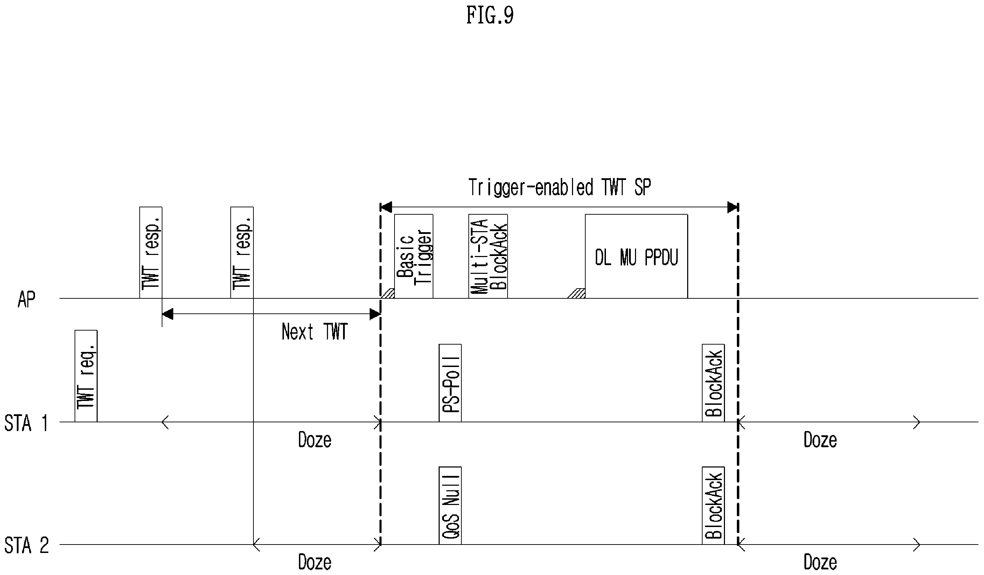

FIG. 9 is a diagram for describing an example of an individual TWT operation to which the present disclosure may be applied.

An individual TWT is a mechanism that an AP and non-AP STA perform data exchange after performing negotiation for an awake/doze status of a non-AP STA through transmission or reception of a TWT request/response frame. In an example of FIG. 9, an AP and STA1 may form a trigger-enabled TWT agreement through a TWT request frame and a TWT response frame. Here, a method used by STA1 is a solicited TWT method, which is a method that when STA1 transmits a TWT request frame to an AP, STA1 receives information for a TWT operation from an AP through a TWT response frame. On the other hand, STA2 which performs an unsolicited TWT method may receive information on a trigger-enabled TWT agreement configuration from an AP through an unsolicited TWT response. Specifically, STA2 may calculate a next TWT by adding a specific number from a current TWT value. During a trigger-enabled TWT SP, an AP may transmit a trigger frame to STAs. The trigger frame may inform STAs that an AP has buffered data. In response to it, STA1 may inform an AP of its awake status by transmitting a PS-Poll frame. In addition, STA2 may inform an AP of its awake status by transmitting a QoS Null frame. Here, a data frame transmitted by STA1 and STA2 may be a frame in a TB PPDU form. An AP which confirmed a status of STA1 and STA2 may transmit a DL MU PPDU to awake STAs. When a corresponding TWT SP expires, STA1 and STA2 may switch to a doze status.

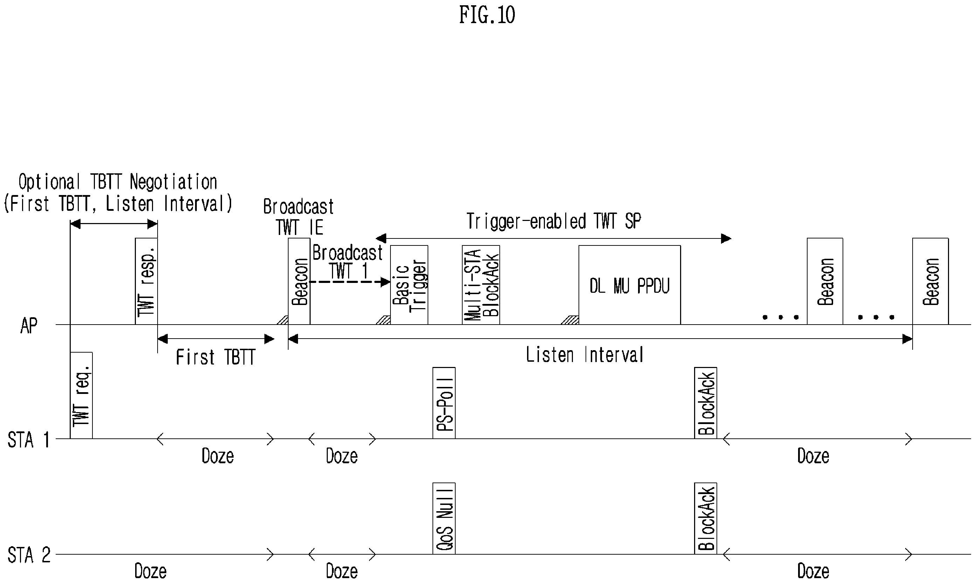

FIG. 10 is a diagram for describing an example of a broadcast TWT operation to which the present disclosure may be applied.

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame. In FIG. 10, STA1 performs a solicited TWT operation and STA2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

Delivery of TWT information may be performed through a TWT information frame and a TWT information element.

As wired and wireless traffic has recently exploded, latency sensitive traffic has also increased significantly. Latency sensitive traffic includes real-time audio/video transmission, and with the proliferation of multimedia devices, the need to support this in a wireless environment has increased. However, compared to a wired environment, there are many things to consider in a wireless environment to support latency sensitive traffic. It is because transmission speed in a wireless environment is lower than that in a wired environment, and an interference problem from the surroundings must also be considered. In particular, in a WLAN system, multiple STAs must compete equally for medium occupancy in an Industry-Science-Medical (ISM) band, so compared to a cellular communication network based on radio resource scheduling by a central base station, it is relatively more difficult to support latency sensitive traffic. The present disclosure describes a new method for supporting latency sensitive traffic in a WLAN system.

In the present disclosure, latency may refer to latency defined in the IEEE 802.11 series standard. For example, it may refer to time until after a frame to be transmitted to a queue of a MAC layer of a transmitting STA is entered, transmission of a transmitting STA is successfully completed in a PHY layer, and a corresponding frame is deleted from a queue of a MAC layer of a transmitting STA after a transmitting STA receives ACK/block ACK, etc. from a receiving STA. In addition, in the present disclosure, a non-AP STA that supports transmission of latency sensitive data may be called a low latency STA. And, data other than latency sensitive data may be called regular data.

As an AP configures a special broadcast TWT for a low latency STA that transmits latency sensitive data, a restricted TWT (restricted-TWT, r-TWT) may support securing a data transmission possibility for a low latency STA in preference to other STAs. A STA may establish a membership for at least one r-TWT schedule for an AP. Here, a r-TWT agreement may be established by the same process as a broadcast TWT agreement, and a broadcast TWT element for this may be defined to include a r-TWT parameter set field. For example, a r-TWT parameter set may refer to a specific broadcast TWT parameter set field that is distinct from other broadcast TWT parameter set fields. In other words, a r-TWT parameter set field may correspond to a special case of a broadcast TWT parameter set field. In addition, an AP may announce a r-TWT SP.

Basically, if another STA that supports a r-TWT operation is a TXOP holder, the TXOP must be ended before the start time of a r-TWT SP advertised in an associated AP. Accordingly, a STA related to a corresponding r-TWT (i.e., a low latency STA) may perform traffic transmission or reception in preference to the other STAs within a r-TWT SP.

In the present disclosure, as described above, a low latency STA related to a specific r-TWT is referred to as a member r-TWT scheduled STA, and other STAs are referred to as a non-member STA. A non-member STA has a capability to support a r-TWT operation, but it may be not a member of any r-TWT, or may support a r-TWT operation and may be a member of another r-TWT, or may be a STA that does not have a capability to support a r-TWT operation.

A STA (e.g., a low latency STA) that supports a restricted SP (or r-TWT SP) operation of a broadcast TWT may inform an AP that latency sensitive data must be transmitted based on a r-TWT operation. If an AP supports a r-TWT operation/mode, an AP may transmit a frame including scheduling information of TWTs requested by each STA to a low latency STA and other STA(s). For example, in order to perform an operation for a r-TWT, non-AP STAs may obtain r-TWT-related information from an AP through a beacon frame, a probe response frame, a (re)association response frame, or other format frames that are not defined yet (e.g., a frame for broadcast, advertisement and announcement).

According to a restricted TWT operation, a separate TXOP (i.e., access by other STAs is restricted) may be secured within a r-TWT SP by using a NAV such as (MU) RTS/CTS or CTS-to-self, or a quiet interval, etc. Before a specific r-TWT SP starts, if there is a TXOP of another STA (i.e., a non-member STA) other than a STA having a membership for the specific r-TWT schedule, it must be stopped. And a TXOP of the another STA (i.e., a non-member STA) may be additionally performed after the specific r-TWT SP ends.

### Quiet Interval

A quiet interval may be indicated by a quiet element or a quiet channel element. Basically, a STA receiving a quiet element or a quiet channel element may not perform transmission (or channel access) in a corresponding channel during an indicated quiet interval.

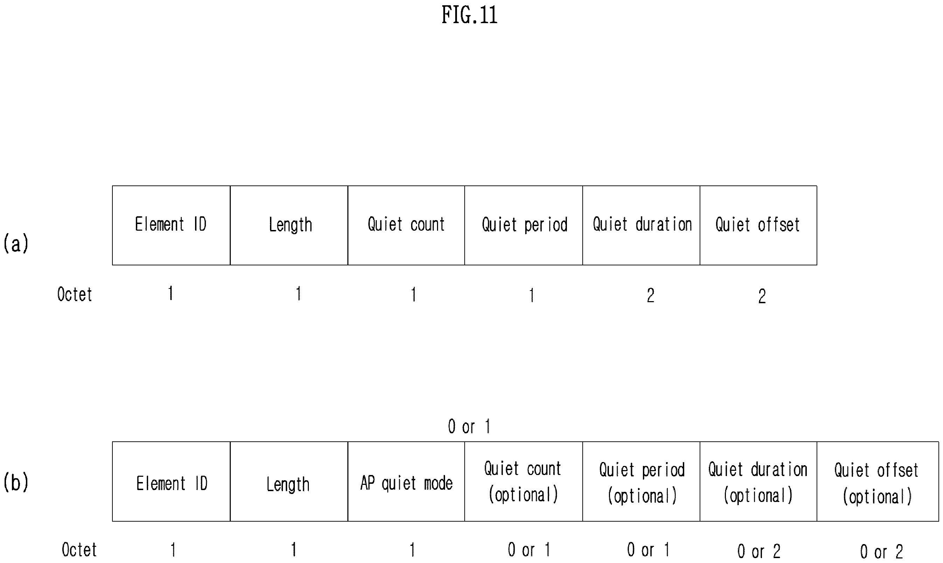

FIG. 11 is a diagram showing an exemplary format of a quiet element and an exemplary format of a quiet channel element to which the present disclosure may be applied.

FIG. 11(a) shows an exemplary format of a quiet element.

A quiet element may define an interval during which transmission is not performed in a current channel. A corresponding interval may also be used to assist in performing channel measurement (or channel test) without interference from other STAs in a BSS.

An element ID field may have a value (e.g., 40) that a corresponding element is a quiet element. A length field may have a value corresponding to a length of subsequent fields (e.g., 6 octets).

A quiet count field may have a value corresponding to the number of TBTTs just before (until) a beacon interval when a next quiet interval starts. Among the values of a corresponding field, 0 may be reserved.

A quiet period field may have a value corresponding to the number of beacon intervals between start points of regularly scheduled quiet intervals defined by a corresponding quiet element. If a value of a quiet period field is 0, it may indicate that a periodic quiet interval is not defined.

A quiet duration field may have a value expressing a duration of a quiet interval in a unit of a time unit (TU). For example, 1 TU may correspond to 1024 microseconds (us).

A quiet offset field may have a value expressing an offset from a TBTT specified by a quiet count field to a start point of a quiet interval in a unit of a TU. A value of a quiet offset field may be a value less than one beacon interval.

A quiet element may be included in a beacon frame, a probe response frame, etc. For example, an AP may schedule a quiet interval by transmitting a beacon/probe response frame that includes a quiet element. A plurality of independent quiet intervals may be scheduled. A STA may set a NAV (on a quiet channel) for a length corresponding to a quiet interval.

FIG. 11(b) shows an exemplary format of a quiet channel element.

A quiet channel element indicates that a secondary channel (e.g., a secondary 80MHz channel of a VHT BSS) will be quiet during a quiet interval, and may be also used to indicate whether a primary channel (e.g., a primary 80MHz channel of a VHT BSS) may be used during a quiet interval in an infrastructure BSS. A quiet interval may be established by using a quiet element, or in an infrastructure BSS, it may be established by using a quiet channel element when a value of an AP quiet mode field is 1.

A quiet channel element may be included in a beacon frames a probe response frame, etc.

An AP quiet mode field may specify a STA operation in an infrastructure BSS during a quiet interval. If communication to an AP is allowed within a primary 80MHz channel (during a quiet interval), an AP quiet mode field may have a value of 1. Otherwise, an AP quiet mode field may have a value of 0.

When a value of an AP quiet mode field is 1, a quiet channel element may include a quiet count field, a quiet period field, a quiet duration field and a quiet offset field. Otherwise, corresponding fields may not be included in a quiet channel element.

A quiet count field, a quiet period field, a quiet duration field and a quiet offset field in a quiet channel element are the same as corresponding fields in a quiet element field, so an overlapping description is omitted.

Next, a quiet interval may be scheduled with respect to a r-TWT SP. For example, an AP that supports a r-TWT (e.g., an EHT AP or an AP that supports an EHT subsequent (e.g., UHR) standard) may schedule a quiet interval that overlap with a r-TWT SP. It may be referred to as an overlapping quiet interval. An overlapping quiet interval, if scheduled, may be required to have a duration of 1 TU and start at the same time point as a start point of a corresponding r-TWT SP.

An overlapping quiet interval may be configured by including at least one quiet element in a beacon frame, a probe response frame, etc. transmitted by an AP (e.g., an EHT AP) supporting a r-TWT.

Non-AP EHT STAs may behave as if there is no overlapping quiet interval.

Alternatively, an AP may use a quiet interval for channel measurement/test by managing or avoiding overlap between a scheduling quiet interval and a r-TWT SP.

### Quiet Channel-based Operation for Extended Bandwidth

The above-described quiet channel element is defined based on a WLAN system having a bandwidth of 160MHz (e.g., VHT technology), and specifically, 0 and 1, values of an AP quiet mode field in a quiet channel element, are defined to indicate whether communication to an AP is allowed only for a primary 80MHz channel during a quiet interval. In a WLAN system supporting an extended bandwidth exceeding a 160MHz bandwidth such as 240MHz, 320MHz, 480MHz, 640MHz, etc., it is necessary to indicate whether communication is allowed during a quiet interval on a variety of combinations of channels and a new method is required to support this. The present disclosure includes a method for newly defining the AP quiet mode field of a quiet channel element in order to indicate one of various combinations for a channel where communication to an AP is allowed and/or is not allowed within an extended bandwidth.

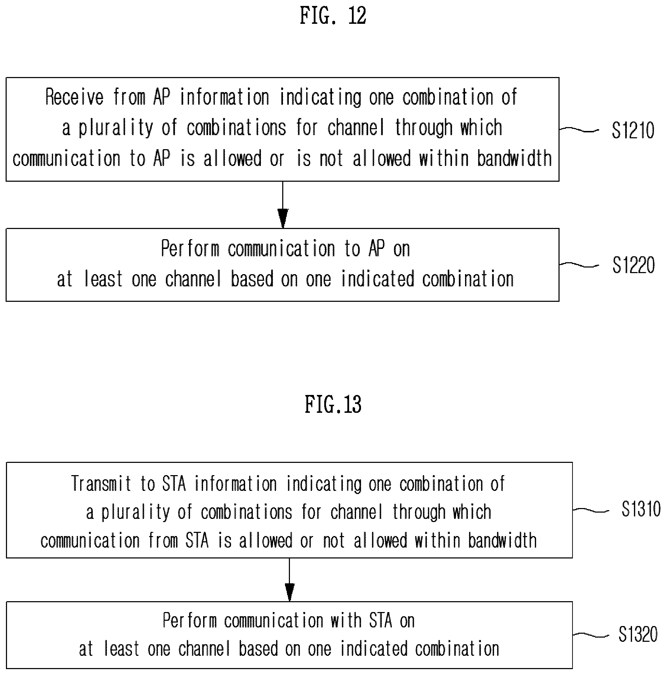

FIG. 12 is a diagram for describing an example of a quiet channel-based operation of a STA according to the present disclosure.

In S1210, a STA may receive from an AP information indicating one of a plurality of combinations for a channel where communication to an AP is allowed or not allowed within a bandwidth. Corresponding information may be included, for example, in an AP quiet mode field within a quiet channel element. Whether communication to an AP is allowed may be based on a predetermined time interval (e.g., a quiet interval).

A plurality of combinations may include combination(s) of channel(s) where communication to an AP is allowed. A plurality of combinations may include combination(s) of channel(s) where communication to an AP is not allowed. A plurality of combinations may include combination(s) of channel(s) where communication to an AP is allowed and combination(s) of channel(s) where communication to an AP is not allowed. One of a plurality of combinations may correspond to a combination indicating that communication to an AP is not allowed in all channels within a bandwidth (i.e., the entire bandwidth).

A combination of allowed channels or a combination of not-allowed channels may include continuous channels on a frequency domain or may include discontinuous channels.

Within a bandwidth, a primary channel may be defined with a variety of channel widths. For example, within a 320MHz bandwidth, a primary 160MHz channel (P160), a primary 80MHz channel (P80), a primary 40MHz channel (P40) and a primary 20MHz channel (P20) may be defined. Within a 240MHz bandwidth, P160, P80, P40 and P20 channels may be defined. Within a 640MHz bandwidth, P320, P160, P80, P40 and P20 channels may be defined. Within a 480MHz bandwidth, P320, P160, P80, P40 and P20 channels may be defined. Within a bandwidth, a primary channel with a wider narrow channel width may be defined to include a primary channel with a narrower channel width. The remaining channels other than a primary channel may correspond to a secondary channel and a secondary channel may also be defined with a variety of channel widths. Accordingly, within one bandwidth, a combination of one primary channel with various channel widths and at least one secondary channel with various channel widths may be defined.

Allowed channel(s) may include only one allowed primary channel or may include one allowed primary channel and one allowed secondary channel. For example, for a 320MHz bandwidth, the first combination may correspond to P160, the second combination may correspond to P160 and the first secondary 80MHz channel (S80) and the third combination may correspond to P160 and the second secondary 80MHz channel (S80-1). For example, for a 320MHz bandwidth, the first combination may correspond to P80, the second combination may correspond to P80 and S80, the third combination may correspond to P80 and S80-1 and the fourth combination may correspond to P80 and the third secondary 80 MHz channel (S80-2).

Additionally or alternatively, allowed channel(s) may include one allowed primary channel and a plurality of allowed secondary channels. For example, for a 320MHz bandwidth, the first combination may correspond to P80, S80, and S80-1, the second combination may correspond to P80, S80-1, and S80-2, and the third combination may correspond to P80, S80, and S80-2.

Additionally or alternatively, a combination of allowed channel(s) configured only with secondary channel(s) without a primary channel may be defined. Although it is generally defined as operating on a channel including a primary channel, it may support operating only in secondary channel(s) during some time intervals for an operation related to sub-channel selective transmission, etc. and may also indicate a corresponding channel through a quiet channel.

Next, not-allowed channel(s) may include one not-allowed secondary channel. For example, within a 320MHz bandwidth, the first combination may correspond to S80, the second combination may correspond to S80-1, and the third combination may correspond to S80-2.

Additionally or alternatively, not-allowed channel(s) may include a plurality of not-allowed secondary channels. For example, within a 320MHz bandwidth, the first combination may correspond to S80 and S80-1, the second combination may correspond to S80-1 and S80-2, and the third combination may correspond to S80 and S80-2.

Additionally or alternatively, not-allowed channel(s) may include only one not-allowed primary channel or may include one not-allowed primary channel and at least one not-allowed secondary channel. For example, within a 320MHz bandwidth, the first combination may correspond to P80, the second combination may correspond to P80 and S80, the third combination may correspond to P80 and S80-1, and the fourth combination may correspond to P80 and S80-2.

Additionally or alternatively, not-allowed channel(s) may include one not-allowed primary channel and a plurality of not-allowed secondary channels. For example, for a 320MHz bandwidth, the first combination may correspond to P80, S80, and S80-1, the second combination may correspond to P80, S80-1, and S80-2, and the third combination may correspond to P80, S80, and S80-2.

These allowed and/or not-allowed channel(s) may be related to a multi-AP operation between an AP and another AP. For example, by exchanging information about a channel, a usage time, etc. used between APs for a multi-AP operation, a resource allocated to each AP may be determined. For example, when a plurality of APs are allocated a different frequency resource (e.g., a channel) during the same time interval, as described above, a channel to which a corresponding AP is allocated may be directly/indirectly indicated to a STA as an allowed channel and a channel to which another AP is allocated may be directly/indirectly indicated to a STA as a not-allowed channel.

In S1220, a STA may perform communication to an AP on at least one channel based on one combination indicated in S1210. Communication to an AP may be performed during a predetermined time interval (e.g., a quiet interval).

As described above, one combination indicated to a STA may directly indicate channel(s) where communication to an AP is allowed or may indirectly indicate that communication to an AP is allowed in the remaining channel(s) by directly indicating channel(s) where communication to an AP is not allowed.

A channel where a STA actually performs or attempts communication to an AP (or performs channel access) may be all or part of the channel(s) where communication to an AP is allowed, which are determined directly/indirectly based on one combination indicated.

A method described in the example of FIG. 12 may be performed by the first device (100) of FIG. 1. For example, at least one processor (102) of the first device (100) of FIG. 1 may be configured to receive information indicating a combination of channel(s) where communication to the second device (200) is allowed/not-allowed through at least one transceiver (106) and perform communication to the second device (200) or channel access for this in all or part of the allowed channel(s) based thereon. Furthermore, at least one memory (104) of the first device (100) may store instructions for performing a method described in the example of FIG. 12 or examples described below when executed by at least one processor (102).

FIG. 13 is a diagram for describing an example of a quiet channel-based operation of an AP according to the present disclosure.

In S1310, an AP may transmit to a STA information indicating one of a plurality of combinations for a channel where communication from a STA is allowed or not allowed within a bandwidth. Corresponding information may be included, for example, in an AP quiet mode field within a quiet channel element. Whether communication from a STA to an AP is allowed may be based on a predetermined time interval (e.g., a quiet interval).

In S1320, an AP may perform communication with a STA on at least one channel based on one combination indicated in S1310. Communication with a STA may be performed during a predetermined time interval (e.g., a quiet interval).

In the example of FIG. 13, examples of combinations for an allowed/not-allowed channel and examples of channels for performing communication determined based on a corresponding combination are the same as in the example of FIG. 12, so an overlapping description is omitted.

A method described in the example of FIG. 13 may be performed by the second device (200) of FIG. 1. For example, at least one processor (202) of the second device (200) of FIG. 1 may be configured to transmit to the first device (100) information indicating a combination of channel(s) where communication is allowed/not-allowed through at least one transceiver (206) and perform communication with the first device (100) in all or part of the allowed channel(s) based thereon. Furthermore, at least one memory (204) of the second device (200) may store instructions for performing a method described in the example of FIG. 13 or examples described below when executed by at least one processor (202).

Examples of FIG. 12 and FIG. 13 may correspond to some of the various examples of the present disclosure. Hereinafter, various examples of the present disclosure including the example of FIG. 12 and FIG. 13 are described in more detail.

In embodiments described below, an extended bandwidth is described by using a 320MHz bandwidth and a 240MHz bandwidth as a representative example to which the present disclosure is applied, but examples of the present disclosure may be equally applied to other extended bandwidths such as 480MHz, 640MHz, etc.

In addition, the scope of the present disclosure is not limited by the name of a quiet channel element, an AP quiet mode field, etc., but the element and field of any name corresponding to information included in the element and field of such an exemplary name are also included in the scope of the present disclosure.

### Embodiment 1

This embodiment includes examples based on indication information about channel(s) where frame exchange between an AP and a STA is allowed/not-allowed in a 320MHz bandwidth.

For example, the specific value of an AP quiet mode field in a quiet channel element may indicate that data transmission or reception (or frame exchange) between an AP and a STA is allowed during a quiet interval in specific channel(s) on a specific bandwidth. Since the AP quiet mode field of a quiet channel element has a length of 8 bits (1 octet), it may indicate 256 values from 0 to 255. Examples for indicating a combination of allowed/not-allowed channel(s) by using a value other than two values of 0 and 1 that are previously defined in an AP quiet mode field are described below. The scope of the present disclosure is not limited to an exemplary corresponding relationship of a combination of the specific value of an AP quiet mode field and specific channel(s) indicated by it and may include various corresponding relationships other than an exemplary corresponding relationship.

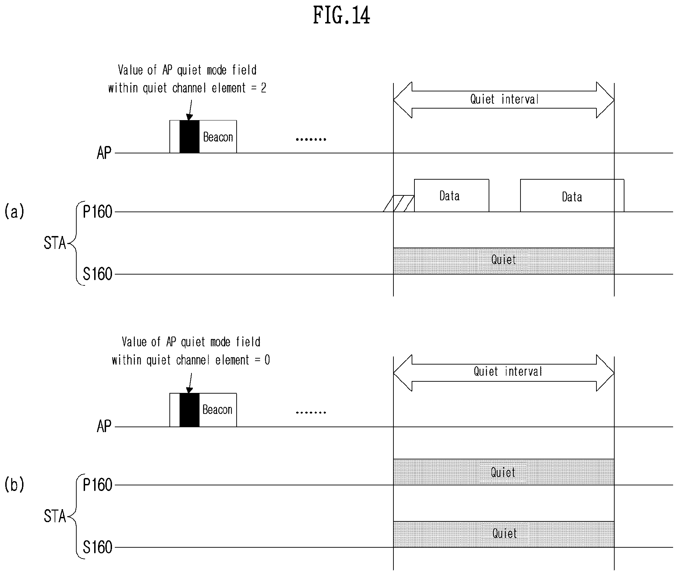

FIGS. 14 to 16 are a diagram for describing various examples of a quiet channel-based operation according to the present disclosure.

In the example of FIG. 14(a), when the value of an AP quiet mode field is 2, a STA may be defined to transmit or receive data within P160 during a quiet interval with an AP. It may indirectly indicate that data transmission or reception is not allowed in the remaining S160 except for P160.

A STA may receive from an AP a frame (e.g., a beacon frame) in which 2 is included as the value of an AP quiet mode field within a quiet channel element. Thereafter, since data transmission or reception is allowed only in P160 during a quiet interval announced from an AP through a quiet element, a corresponding STA may perform data transmission or reception within P160.

In the example of FIG. 14(b), when the value of an AP quiet mode field is 0, it may be defined that all channels within a bandwidth (i.e., P80, P160 and secondary channel(s)) are quiet during a quiet interval (i.e., communication is not allowed in all channels within a bandwidth).

A STA may receive from an AP a frame in which 0 is included as the value of an AP quiet mode field within a quiet channel element. Thereafter, a corresponding STA does not perform data transmission or reception in the entire bandwidth during a quiet interval announced from an AP through a quiet element.

In the example of FIG. 15(a), for a STA supporting an operation in a bandwidth of 320MHz or higher (e.g., an EHT STA), when a bandwidth configured by an AP for a corresponding STA is 320MHz and the value of an AP quiet mode field is 1, a corresponding STA is allowed to transmit or receive data with an AP only within P80 during a quiet interval. It may indirectly indicate that data transmission or reception is not allowed in S80, S80-1 and S80-2 except for P80.

A STA may receive from an AP a frame in which 1 is included as the value of an AP quiet mode field within a quiet channel element. Thereafter, since data transmission or reception is allowed only in P80 during a quiet interval announced from an AP through a quiet element, a corresponding STA may perform data transmission or reception within P80.

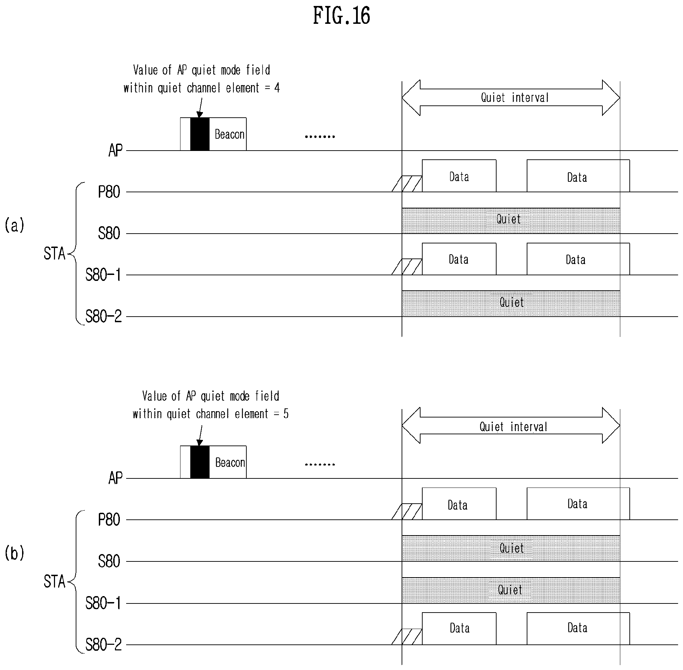

The example of FIG. 15(a) corresponds to a case in which communication is allowed during a quiet interval only for one primary channel and examples of FIG. 15(b), FIG. 16(a) and FIG. 16(b) correspond to a case in which communication is allowed during a quiet interval on one primary channel and one secondary channel.

For example, when one STA performs communication on a plurality of channels, it may transmit data (e.g., a PPDU) simultaneously across a plurality of channels. For example, in the example of FIG. 15(b), FIG. 16(a) and FIG. 16(b), the start point and the end point of data transmitted on one primary channel and one secondary channel may be the same. For example, in the exemplary drawings of the present disclosure, data transmitted/received at the same start point and the same end point on a plurality of channels may mean that one data (e.g., a PPDU) is transmitted/received across a plurality of channels.

In the example of FIG. 15(b), an AP indicates for a STA the value of an AP quiet mode field of a quiet channel element as 3, so a STA may perform data transmission or reception during a quiet interval on P80 and S80. In FIG. 16(a), an AP indicates for a STA the value of an AP quiet mode field of a quiet channel element as 4, so a STA may perform data transmission or reception during a quiet interval on P80 and S80-1. In FIG. 16(b), an AP indicates for a STA the value of an AP quiet mode field of a quiet channel element as 5, so a STA may perform data transmission or reception during a quiet interval on P80 and S80-2.

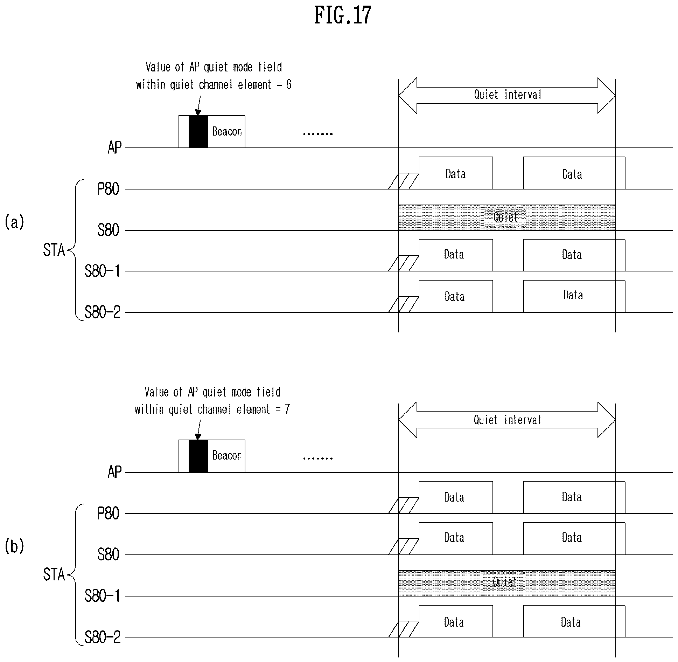

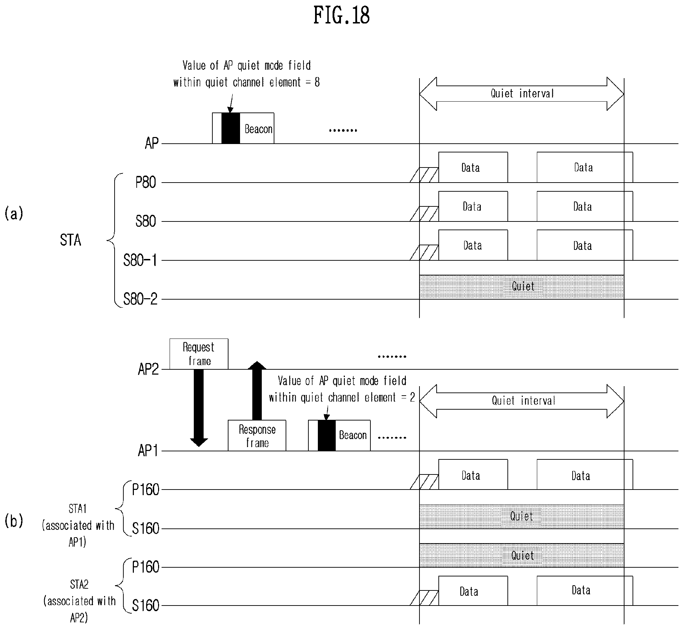

FIGS. 17 and 18 are a diagram for describing additional examples of a quiet channel-based operation according to the present disclosure.

The example of FIG. 17(a), FIG. 17(b) and FIG. 18(a) relates to a method for indicating a STA to be quiet (i.e., not allow data transmission or reception) during a quiet interval only in one secondary channel among the secondary channels allocated to a STA. In other words, it may be indirectly indicated that data transmission or reception is allowed in the remaining channel(s) except for a channel to be quiet (i.e., not-allowed).

The example of FIG. 17(a) illustrates a case in which a STA receives a frame where an AP quiet mode field is configured as 6. In a corresponding case, a STA may be quiet only on S80 among its secondary channels during a quiet interval and may perform data transmission or reception with an AP in the remaining primary and secondary channels (i.e., P80, S80-1, S80-2).

The example of FIG. 17(b) illustrates a case in which a STA receives a frame where an AP quiet mode field is configured as 7. In a corresponding case, a STA may be quiet only on S80-1 among its secondary channels during a quiet interval and may perform data transmission or reception with an AP in the remaining primary and secondary channels (i.e., P80, S80, S80-2).

The example of FIG. 18(a) illustrates a case in which a STA receives a frame where an AP quiet mode field is configured as 8. In a corresponding case, a STA may be quiet only on S80-1 among its secondary channels during a quiet interval and may perform data transmission or reception with an AP in the remaining primary and secondary channels (i.e., P80, S80, S80-2).

In examples described above, combinations of allowed/not-allowed channels according to the value of an AP quiet mode field may be illustrated as in the following table.

**[Table 1]**

| Value of AP Quiet Mode Field | Description |
|---|---|
| 0 | Data transmission or reception is not allowed (i.e., quiet) in all channel bandwidths during a quiet interval. |
| 1 | Data transmission or reception is allowed in a primary 80MHz channel during a quiet interval (data transmission or reception is not allowed in the remaining channels). |
| 2 | Data transmission or reception is allowed in a primary 160MHz channel during a quiet interval (data transmission or reception is not allowed in the remaining channels). |
| 3 | Data transmission or reception is allowed in a primary 80MHz channel and the first secondary 80MHz channel (S80) during a quiet interval (data transmission or reception is not allowed in the remaining channels). |
| 4 | Data transmission or reception is allowed in a primary 80MHz channel and the second secondary 80MHz channel (S80-1) during a quiet interval (data transmission or reception is not allowed in the remaining channels). |
| 5 | Data transmission or reception is allowed in a primary 80MHz channel and the third secondary 80MHz channel (S80-2) during a quiet interval (data transmission or reception is not allowed in the remaining channels). |
| 6 | Data transmission or reception is not allowed in the first secondary 80MHz channel (S80) during a quiet interval (data transmission or reception is allowed in the remaining channels). |
| 7 | Data transmission or reception is not allowed in the second secondary 80MHz channel (S80-1) during a quiet interval (data transmission or reception is allowed in the remaining channels). |
| 8 | Data transmission or reception is not allowed in the third secondary 80MHz channel (S80-2) during a quiet interval (data transmission or reception is allowed in the remaining channels). |
| 9 - 255 | Reserved |

FIG. 18(b) shows an example in which a quiet channel-based operation according to the present disclosure is applied to scheduling coordination between APs in a multi-AP environment. However, a quiet channel-based operation according to the present disclosure is not applied only to a multi-AP operation, but may also be applied for other operations/purposes.

The example of FIG. 18(b) assumes a case in which AP1 and AP2 perform a multi-AP operation. For example, AP1 and AP2 may correspond to slave APs under one master AP or one of AP1 or AP2 may be a master AP and the other may be a slave AP. For example, a quiet channel element according to the present disclosure may be used in order for AP2 to allocate a R-TWT SP for a predetermined time interval to a STA associated with AP2.

AP2 may transmit to AP1 a request frame including information on the total time length/interval required for data transmission or reception. When AP1 may accept a corresponding request, it may transmit to AP2 a response frame including success status information indicating success, information about a start time when the data transmission or reception of AP2 is allowed (it may correspond to the start time of a quiet interval that AP1 intends to allocate to a STA associated with it) or information such as a used channel location, a channel width, etc. If AP1 may not accept the request of AP2, it may transmit to AP2 a response frame including status code information for rejecting a corresponding request.

When AP1 accepts the request of AP2, AP1 may configure the value of an AP quiet mode within a quiet channel element as 2 and transmit it to STA1 associated with it through a beacon frame, etc. Accordingly, it is impossible to indicate STA1 that for STA1 associated with AP1 during a quiet interval, the data transmission or reception of STA1 within a primary 160MHz channel is allowed and the data transmission or reception of STA1 is not allowed in a secondary 160MHz channel.

Accordingly, during a quiet interval, communication of STA2 associated with AP2 to AP2 may be allowed in a secondary 160MHz channel. In this regard, AP2 may provide STA2 with a quiet channel element including an AP quiet mode field configured as a value indicating that communication is not allowed in P160 or that communication is allowed only in S160 (e.g., a value other than 0 to 8 described above) through a beacon frame (not shown).

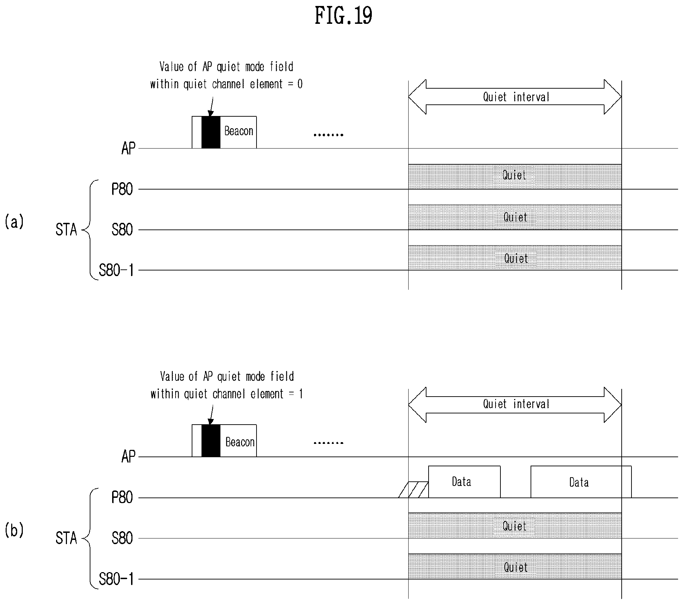

The example of FIG. 18(b) corresponds to an example in which the example of FIG. 14(a) is applied to a multi-AP operation. Similarly, examples for FIG. 14(b) to FIG. 18(a) as well as examples of FIG. 19 and below described later may be applied to indicate a channel where communication is allowed/not-allowed to STA(s) associated with each of the corresponding APs when APs operate on a frequency resource distinct in the same time interval in a multi-AP operation. In other words, when negotiation for a multi-AP operation (i.e., resource allocation) between AP1 and AP2 in FIG. 18(b) is successful, an AP quiet mode value within a quiet channel element may be announced to each STA by being configured as a value indicating that communication is allowed in channel(s) corresponding to a frequency resource to which it is allocated (or communication is not allowed in channel(s) corresponding to a frequency resource to which it is not allocated).

Accordingly, during a predetermined time interval, each AP may be scheduled to use an allocated channel and the data transmission or reception of a STA may be allowed during a quiet interval in a specific channel within a bandwidth.

### Embodiment 2

This embodiment includes examples based on indication information about channel(s) where frame exchange between an AP and a STA is allowed/not-allowed in a 240MHz bandwidth.

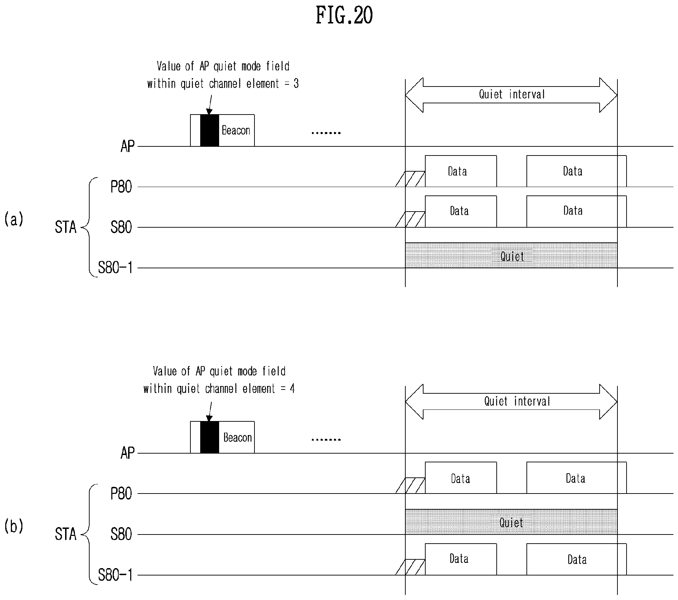

FIGS. 19 and 20 are a diagram for describing additional examples of a quiet channel-based operation according to the present disclosure.

The example of FIG. 19(a) shows a case in which the value of an AP quiet mode field in a quiet channel element provided from an AP through a beacon frame, etc. is configured as 0, indicating that communication is not allowed in all channels within a bandwidth including P80. Accordingly, it shows a case in which during a quiet interval when a STA receives an announcement through a quiet element, the communication of a STA to an AP is not allowed in all of P80, S80 and S80-1 (i.e., data transmission or reception is not performed).

The example of FIG. 19(b) shows a case in which the value of an AP quiet mode field in a quiet channel element provided from an AP through a beacon frame, etc. is configured as 1, indicating that communication is allowed within P80. It may correspond to a case in which it is indirectly indicated that communication is not allowed in S80 and S80-1 excluding P80. Accordingly, it shows a case in which during a quiet interval when a STA receives an announcement through a quiet element, the communication of a STA to an AP may be performed within P80 and the communication of a STA to an AP is not allowed in S80 and S80-1.

The example of FIG. 20(a) shows a case in which the value of an AP quiet mode field in a quiet channel element provided from an AP through a beacon frame, etc. is configured as 2, indicating that communication is allowed within P80 and S80. It may correspond to a case in which it is indirectly indicated that communication is not allowed in S80-1 excluding P80 and S80. Accordingly, it shows a case in which during a quiet interval when a STA receives an announcement through a quiet element, the communication of a STA to an AP may be performed within P80 and S80 and the communication of a STA to an AP is not allowed in S80-1.

The example of FIG. 20(b) shows a case in which the value of an AP quiet mode field in a quiet channel element provided from an AP through a beacon frame, etc. is configured as 3, indicating that communication is allowed within P80 and S80-1. It may correspond to a case in which it is indirectly indicated that communication is not allowed in S80 excluding P80 and S80-1. Accordingly, it shows a case in which during a quiet interval when a STA receives an announcement through a quiet element, the communication of a STA to an AP may be performed within P80 and S80-1 and the communication of a STA to an AP is not allowed in S80.

In examples described above, combinations of allowed/not-allowed channels according to the value of an AP quiet mode field may be illustrated as in the following table.

**[Table 2]**

| Value of AP Quiet Mode Field | Description |
|---|---|
| 0 | Data transmission or reception is not allowed (i.e., quiet) in all channel bandwidths during a quiet interval. |
| 1 | Data transmission or reception is allowed in a primary 80MHz channel during a quiet interval (data transmission or reception is not allowed in the remaining channels). |
| 2 | Data transmission or reception is allowed in a primary 80MHz channel and the first secondary 80Mhz channel (S80) during a quiet interval (data transmission or reception is not allowed in the remaining channels). |
| 3 | Data transmission or reception is allowed in a primary 80MHz channel and the second secondary 80MHz channel (S80-1) during a quiet interval (data transmission or reception is not allowed in the remaining channels). |
| 4-255 | Reserved |

With respect to examples in Table 1 and Table 2, 0, the value of an AP quiet mode field, is conventionally defined as a case in which communication to an AP is not allowed only in a primary 80MHz channel (which corresponds to the value of 1). When it is defined in this way, in a system where a bandwidth exceeds 160MHz or where an operation is allowed only in secondary channel(s) excluding a primary channel, it may be clear that communication is not allowed in a primary 80MHz channel, but there is a problem that it is unclear whether communication is allowed in the remaining channel(s). Accordingly, the present disclosure includes an example in which 0, the value of an AP quiet mode field, newly and clearly indicates that communication is not allowed in all channels within a bandwidth as described above.

While only whether communication to an AP in a primary 80MHz channel within a 160MHz bandwidth is allowed may be indicated through an AP quiet mode field in the existing WLAN system, the value of an AP quiet mode field may indicate one of various combination(s) of allowed channel(s) or various combination(s) of not-allowed channel(s) in an extended bandwidth (e.g., 240MHz, 320MHz, 480MHz, 640MHz, etc.) in the present disclosure. Accordingly, it is possible to clearly indicate allowed/not-allowed channel(s) within a bandwidth in various environments and provide a new method for flexibly and efficiently allocating a frequency resource.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless local area network (WLAN) system, the method comprising:
receiving a quiet channel element including information indicating one combination among a plurality of combinations for a channel through which communication to a first access point (AP) is allowed or a channel through which the communication to the first AP is not allowed within a bandwidth; and
performing the communication to the first AP on at least one channel based on the one combination.

2. The method of Claim 1, wherein:
the plurality of combinations include a combination of one allowed primary channel and zero or more allowed secondary channel.

3. The method of Claim 2, wherein:
the combination of the one allowed primary channel and the zero or more allowed secondary channel includes the at least one channel through which the communication to the first AP is performed.

4. The method of Claim 2, wherein:
the bandwidth is 320MHz, a width of the primary channel is 160MHz, and a width of the secondary channel is 160MHz or 80MHz.

5. The method of Claim 2, wherein:
the bandwidth is 320MHz or 240MHz, a width of the primary channel is 80MHz, and a width of the secondary channel is 80MHz.

6. The method of Claim 2, wherein:
at least one remaining secondary channel excluding the allowed primary channel and the zero or more allowed secondary channel within the bandwidth corresponds to at least one secondary channel through which the communication to the first AP is not allowed.

7. The method of Claim 1, wherein:
the plurality of combinations include a combination of at least one secondary channel through which the communication to the first AP is not allowed among a plurality of secondary channels.

8. The method of Claim 7, wherein:
at least one remaining channel excluding the at least one not-allowed secondary channel within the bandwidth includes the at least one channel through which the communication to the first AP is performed.

9. The method of Claim 1, wherein:
at least one secondary channel through which the communication to the first AP is not allowed, based on the one combination indicated by the information, includes at least one channel used by a second AP of a multi-AP operation.

10. The method of Claim 9, wherein:
the multi-AP operation includes exchanging a request and a response for information including a used channel and a use time between the first AP and the second AP.

11. The method of Claim 1, wherein:
the plurality of combinations correspond to different values of an AP quiet mode field of the quiet channel element, respectively.

12. The method of Claim 1, wherein:
the plurality of combinations include one combination indicating that the communication to the first AP is not allowed in all channels within the bandwidth.

13. The method of Claim 1, wherein:
the quiet channel element is included in a beacon frame or a probe response frame.

14. A station (STA) in a wireless local area network (WLAN) system, the STA comprising:
at least one transceiver; and
at least one processor connected to the at least one transceiver,
wherein the at least one processor is configured to:
receive, through the at least one transceiver, a quiet channel element including information indicating one combination among a plurality of combinations for a channel through which communication to a first access point (AP) is allowed or a channel through which the communication to the first AP is not allowed within a bandwidth; and
perform the communication to the first AP on at least one channel based on the one combination.

15. A method performed by a first access point (AP) in a wireless local area network (WLAN) system, the method comprising:
transmitting, to a station (STA), a quiet channel element including information indicating one combination among a plurality of combinations for a channel through which communication to the first AP is allowed or a channel through which the communication to the first AP is not allowed within a bandwidth; and
performing communication with the STA on at least one channel based on the one combination.

16. A first access point (AP) in a wireless local area network (WLAN) system, the AP comprising:
at least one transceiver; and
at least one processor connected to the at least one transceiver,
wherein the at least one processor is configured to:
transmit, through the at least one transceiver, to a station (STA), a quiet channel element including information indicating one combination among a plurality of combinations for a channel through which communication to the first AP is allowed or a channel through which the communication to the first AP is not allowed within a bandwidth; and
perform, through the at least one transceiver, communication with the STA on at least one channel based on the one combination.

17. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of Claim 1 to Claim 13.

18. At least one non-transitory computer-readable medium storing at least one instruction, wherein:
the at least one instruction controls a station (STA) device to perform a method according to any one claim of Claim 1 to Claim 13 in a wireless local area network (WLAN) system by being executed by at least one processor.
